(19) Europäisches Patentamt
European Patent Office
Office européen des brevets

(11) **EP 2 073 208 A1**

(12) **EUROPEAN PATENT APPLICATION**
published in accordance with Art. 153(4) EPC

(43) Date of publication:
**24.06.2009 Bulletin 2009/26**

(51) Int Cl.:
**G11B 20/12** (2006.01)   **G11B 7/004** (2006.01)
**G11B 7/0045** (2006.01)   **G11B 20/10** (2006.01)
**G11B 20/18** (2006.01)

(21) Application number: **07829023.6**

(22) Date of filing: **02.10.2007**

(86) International application number:
**PCT/JP2007/069283**

(87) International publication number:
**WO 2008/041700 (10.04.2008 Gazette 2008/15)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.10.2006 JP 2006272744**

(71) Applicant: **Panasonic Corporation Kadoma-shi Osaka 571-8501 (JP)**

(72) Inventors:
• **KIMURA, Shinichi Osaka-shi, Osaka 540-6207 (JP)**

• **UEDA, Hiroshi saka-shi, Osaka 540-6207 (JP)**
• **TAMAI, Kiyohiko Osaka-shi, osaka540-6207 (JP)**
• **TAKAUCHI, Kenji Osaka-shi, Osaka 540-6207 (JP)**

(74) Representative: **Grünecker, Kinkeldey, Stockmair & Schwanhäusser Anwaltssozietät Leopoldstrasse 4 80802 München (DE)**

(54) **OPTICAL DISC DEVICE**

(57)    To provide a technique for managing a storage area such that if an error has occurred while data is being written, the data will not be written on a defective area where that error has occurred.

An optical disc apparatus includes a defect determining section for determining, if an error has occurred on a storage area while data is being written there, the storage area to be a defective area and measuring the size of the defective area, and a defect management section for instructing where on the optical disc to assign a replacement area of the size that has been determined based on the measured one of the defective area in accordance with an instruction to write the data and how to manage the storage area such that no data will be written on the defective area anymore. And the optical disc apparatus continues to write the data on the replacement area that has been assigned.

*FIG.2*

**Description**

**TECHNICAL FIELD**

The present invention relates to an optical disc apparatus and a method for making a defect management on an optical disc. More particularly, the present invention relates to a technique for performing a defect replacement process adaptively according to the size of a defective area that has been produced, as a result of a write error, as a bubble that covers a broad storage area.

**BACKGROUND ART**

A known optical disc is an information storage medium with a sector structure. Optical discs are roughly classifiable into three types according to their property. A first type is a read-only disc on which data is stored as unevenness on the surface and to which the user is never allowed to add any data newly. A second type is a write-once disc, which includes an organic dye or any other appropriate material as a recording film and on which data can be written only once. And a third type is a rewritable disc, which includes a phase change material or other suitable material as a recording film and on which data can be written and rewritten a number of times.

Recently, as audiovisual data including audio data and video data (which will be referred to herein as "AV data") has been broadcast or distributed in the digital form more and more often, there is an increasing demand for optical discs with higher storage densities and bigger storage capacities. To increase the storage capacity, it is an effective measure to take to provide multiple storage layers for a single disc. For example, as for a read-only DVD, the single optical disc has two storage layers, thereby achieving twice as big a capacity as a normal single-layer disc's.

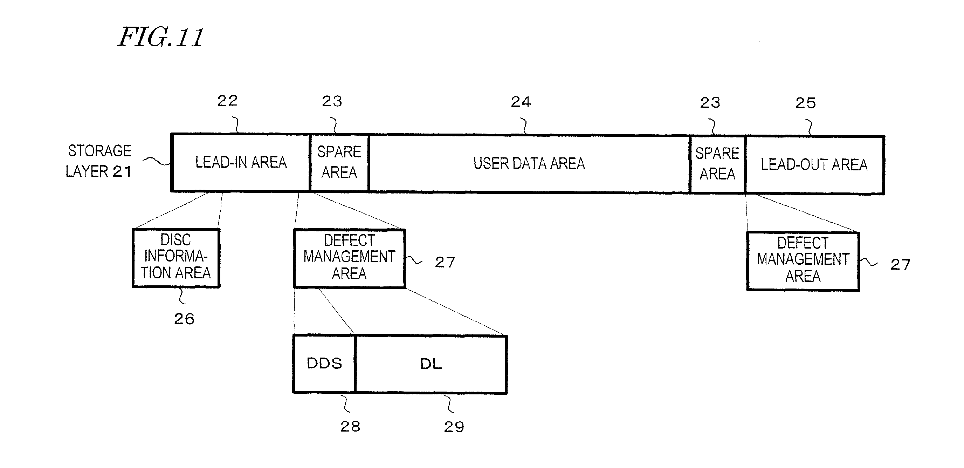

FIG. **11** illustrates a layout of respective areas on the storage layer **21** of a conventional rewritable optical disc. In the storage layer **21** shown in FIG. **11,** a lead-in area **22** includes a disc information area **26** and a defect management area (DMA) **27,** while a lead-out area **25** includes another defect management area **27.** A spare area **23** is provided between the lead-in area **22** and a user data area **24,** and another spare area **23** is provided between the user data area **24** and the lead-out area **25.**

The disc information area **26** stores parameters for use to read and write data from/on the optical disc and information about the physical properties thereof.

The defect management area **27** and the spare area **23** are provided to make a defect management by replacing a sector on the user data area **24** from/on which data cannot be read or written properly (which will be referred to herein as a "defective sector") with another sector in good condition.

The spare area **23** includes a sector to replace the defective sector. The former sector will be referred to herein as a "spare sector" and the latter sector that replaces the defective sector will be referred to herein as a "replacement sector". In a DVD-RAM, two spare areas **23** are respectively arranged inside and outside of the user data area **24.** And to cope with a situation where the number of defective sectors has increased more than expected, the spare area **23** arranged on the outer area is designed to have its size extended.

The defect management area **27** includes a disc definition structure (DDS) **28** that retains a format about defect management including management of the size and the locations of the spare areas **23** and a defect list (DL) **29** that lists the respective locations of defective sectors and their spare sectors. In order to enhance the robustness, a lot of optical discs are designed to store the same contents twice on each of the inner and outer defect management areas **27,** i.e., four times overall.

On the other hand, once information has been written on a write-once medium, that information cannot be erased anymore. Due to this property, previously stored information is not rewritten but information is newly added to another location. In other words, additional information is newly stored at a different location. That is why the write-once medium has a different type of management information from the rewritable one.

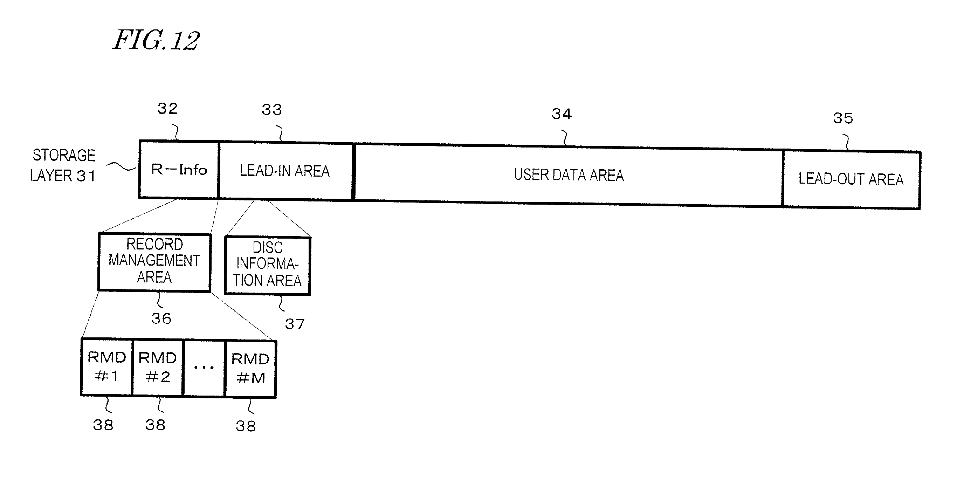

FIG. **12** illustrates a layout of respective areas on the storage layer **31** of a DVD-R, which is a conventional write-once optical disc. Specifically, the storage layer **31** includes an R information (R-Info) area **32,** a lead-in area **33,** a user data area **34** and a lead-out area **35,** which are arranged in this order from the inner edge toward the outer edge of the disc.

A disc information area **37** is provided within the lead-in area **33.**

The R-info area **32** is an area unique to a write-once disc and includes a record management area **36** (which will be abbreviated herein as "RMA").

The RMA **36** is made up of multiple items of record management data **38** (which will be abbreviated herein as "RMD") representing the states of the data on record. By getting the newest RMD **38,** the address of a storage location, to which data can be added, can be known.

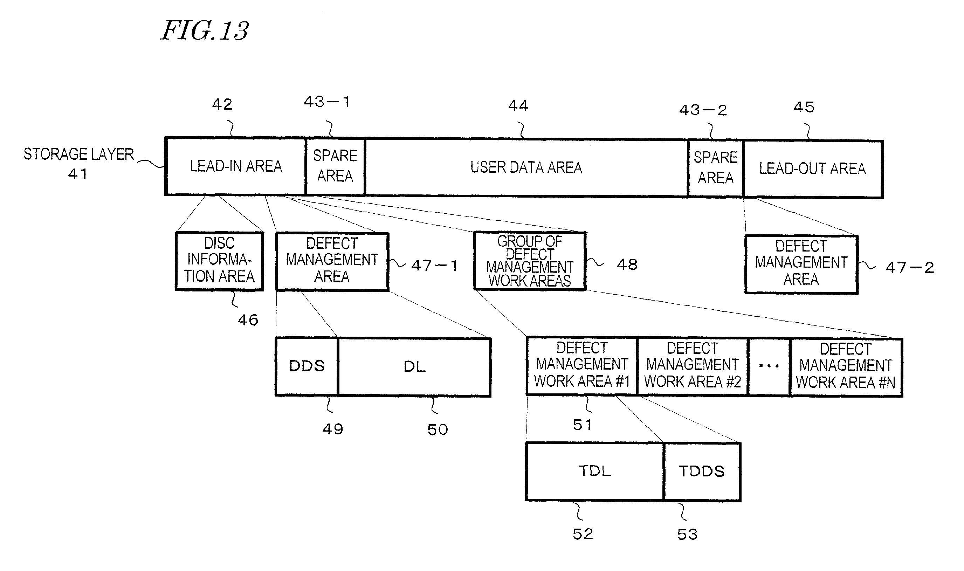

FIG. **13** illustrates a layout of respective areas on the storage layer **41** of a conventional write-once optical disc including defect management information.

The storage layer **41** includes a lead-in area **42,** a spare area **43-1,** a user data area **44,** another spare area **43-2** and a lead-out area **45,** which are arranged in this order from the inner edge toward the outer edge of the disc.

In the lead-in area **42,** provided are a disc information area **46,** a defect management area **47-1** and a group of defect management work areas **48.** The lead-out area **45** also includes a defect management area **47-2.**

The defect management area **47-1** stores pieces of defect management information (DDS and DL) **49** and **50.**

As for a write-once optical disc, information can also be written only once on the defect management area **47,** too, and therefore, the newest piece of defect management information cannot always be stored at the same predetermined location in the defect management area **47** by the technique that can be used in a rewritable optical disc. For that reason, to ensure compatibility with rewritable optical discs, the group of defect management work areas **48** is provided.

The group of defect management work areas **48** consists of a number N of (where N is a positive integer that is equal to or greater than one) defect management work area(s) **51.** Each defect management work area **51** is provided to temporarily store the defect management information that has been updated before the write-once optical disc is subjected to finalize processing. The pieces of information to be stored include a temporary defect list (TDL) **52** that lists the respective storage locations of defective sectors and their spare sectors and a temporary disc definition structure (TDDS) **53** including temporary defect list top location information, which is a piece of information about the top location of the temporary defect list **52.** As used herein, the "finalize processing" is a type of processing to get done to convert the data structure of a write-once optical disc into a one that is compatible with a rewritable optical disc, and refers to writing the contents of the newest defect management work area **51** on the defect management area **47.**

On the disc information areas **26, 37** and **46** shown in FIGS. **11, 12** and **13,** stored in advance (i.e., before the disc is shipped) is information either as uneven pits or by the same method of writing data as the one applied to the data area. On the other hand, the pieces of defect management information including DDS, DL, TDL, and TDDS and the record management data (RMD) are written by an optical disc apparatus, for example, after the disc has been shipped.

If a defect has been detected, an area that covers a predetermined range from that location may be treated as a defective area and a replacement area with a fixed length may be substituted for that defective area. For example, Patent Document No. 1 discloses such a defect management method applicable to a DVD+RW.

Patent Document No. 1: Japanese Patent Application Laid-Open Publication No. 2002-184116

## DISCLOSURE OF INVENTION

## PROBLEMS TO BE SOLVED BY THE INVENTION

In the past, optical discs had only a few large-scale defective areas that cover a number of clusters or even multiple tracks, and therefore, just a replacement area of a fixed length needed to be substituted for a defective area.

But the things have changed dramatically on Blu-ray Discs (BDs) that have been developed recently. That is why if the conventional method of substituting a fixed-length replacement area for a defective area is adopted, a different sort of problem should arise.

For example, if a spin-coating process is adopted to form a light transmitting layer on a BD substrate, then the air could enter the gap between the light transmitting layer and the substrate itself to produce bubbles. Conventional optical discs have been hardly affected by such bubbles because their light transmitting layer is sufficiently thick.

However, in an optical disc with a thinner light transmitting layer and a narrower track pitch such as a BD, the light transmitting layer could warp and lose planarity locally and the area with such a bubble would be a large-scale defective area that covers several tens to several hundreds of clusters or even multiple tracks. On BDs, among other things, such large-scale defective areas are produced more and more often.

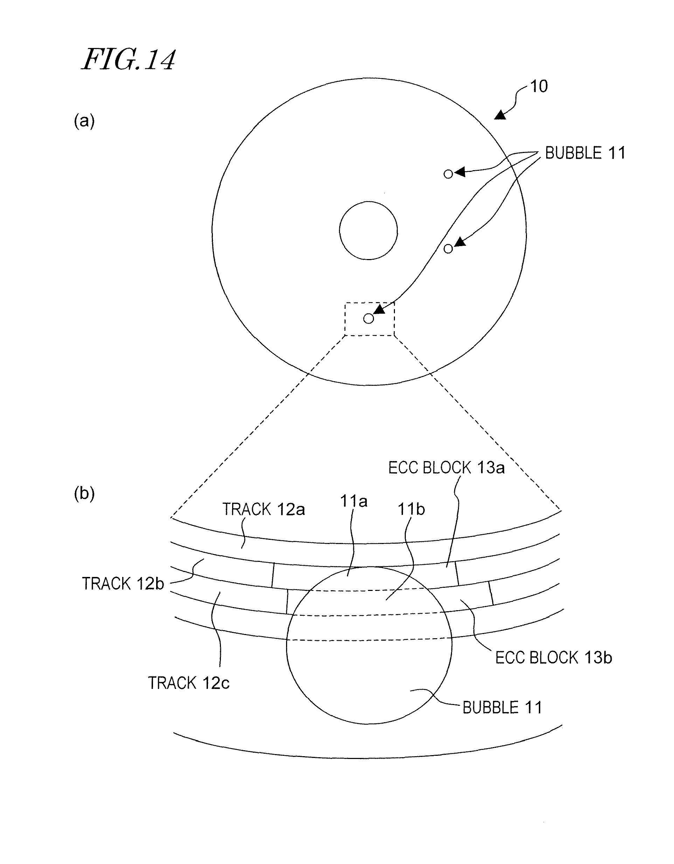

Hereinafter, such areas will be described in further detail. Portion **(a)** of FIG. **14** schematically illustrates the surface of a BD **10** with bubbles **11.** In portion **(a)** of FIG. **14,** the bubbles **11** are illustrated as visible ones to let the reader understand more easily how they affect the operation. Actually, however, there are some invisible bubbles, too.

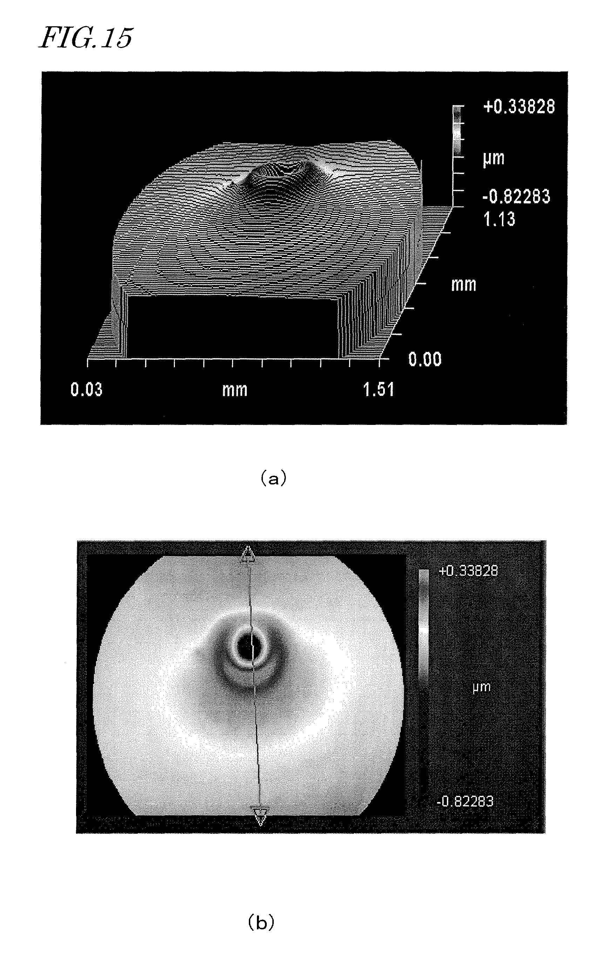

FIGS. **15(a)** and **15(b)** illustrate the shape of a raised portion that was actually formed on the surface of a BD (i.e., on the surface of its light transmitting layer) due to the production of a bubble. A bubble typically has a size (or diameter) of approximately 500 μm to approximately 1,000 μm. If a bubble were produced between the information layer of a BD and the light-transmitting layer thereof, the surface of the light-transmitting layer would be raised locally as shown in FIG. **15** because the light-transmitting layer has as small a thickness as approximately 100 μm. Almost no reflected light returns from the center (or the core) of the bubble but the light beam is not transmitted normally through the raised portion surrounding the bubble, either. The objective lens for use to perform a read/write operation on a BD has a high numerical aperture NA and forms a focal point on a shallow information layer under the surface of the disc. That is why even if the light-transmitting layer were warped only slightly, the spherical aberration would change significantly and the intensity of the reflected light would vary easily.

A bubble may or may not be produced easily according to the type of the manufacturing process of BDs. Specifically, a BD, of which the light-transmitting layer has been formed by a spin-coating process as described above, tends to have a lot of bubbles. On the other hand, a BD, of which the light-transmitting layer has been formed (as a protective sheet) by a bonding process, tends to have a small number of bubbles. It should be noted that bubbles could still be produced by the latter process, too.

Now take a look at FIG. **14** again. Portion **(b)** of FIG. **14** shows a relation between a bubble **11** on the BD **10** and tracks. In the example illustrated in portion **(b)** of FIG. **14,** the bubble **11** is present over the track **12b** and other tracks (including the track **12c**) that are located closer to the outer edge than the track **12b** is, among the tracks **12a** through **12c.** On each of these tracks, data is stored on the basis of a data unit called "ECC block" (or "cluster"). When converted into sectors (each having a size of 2 kilobytes), which are the smallest data unit on an optical disc, one cluster is equal to 32 sectors on a BD. Portions **11a** and **11b** of the bubble **11** are present at the storage locations of clusters **13a** and **13b,** respectively.

A BD has a track pitch of 0.32 $\mu$m. Thus, supposing a single bubble (core) has a size of approximately 100 $\mu$m, at most about 300 ( = 100/0.32) tracks would be affected by a single bubble. On top of that, as an area surrounding the bubble is usually affected, the influence of a bubble could reach a range that typically has a size of about 200 $\mu$m (corresponding to approximately 600 tracks). As a result, that area with the core of the bubble and its surrounding area become a large-scale defective area.

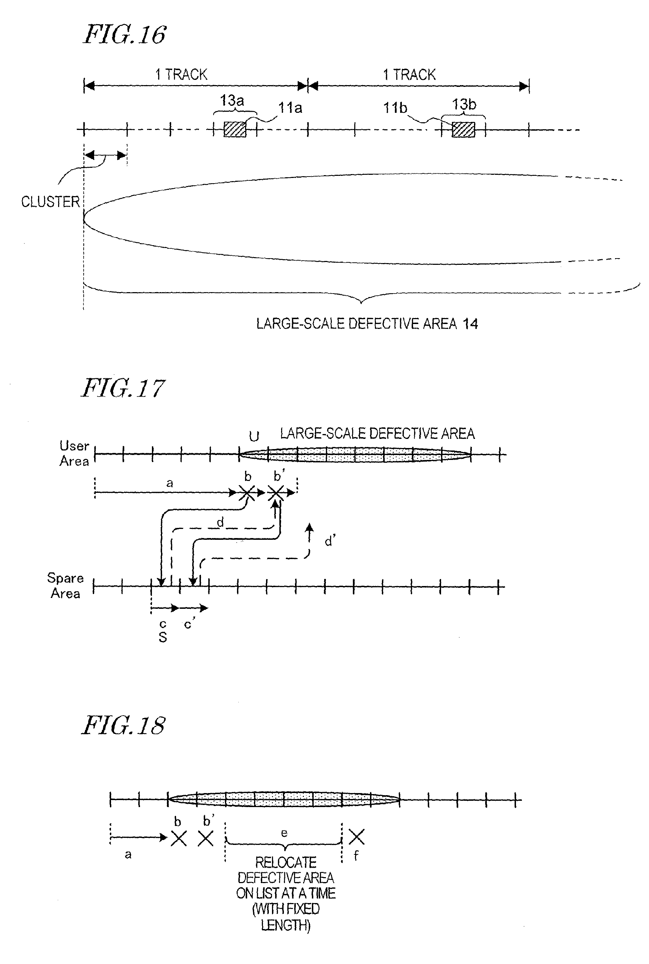

FIG. **16** illustrates the constitution of the large-scale defective area **14.** Some **11a** and **11b** of the bubbles shown in portion **(b)** of FIG. **14** cover clusters **13a** and **13b** belonging to mutually different tracks.

Data is supposed to be read or written using clusters as minimal units (i.e., on a cluster-by-cluster basis). If there is a bubble on a boundary between clusters, then data cannot be read or written from/on multiple clusters. In addition, due to the influence of the bubble, it is often impossible to read or write data from/on clusters surrounding the bubble, either.

Also, due to the influence of bubbles, the servo control could lose its stability over a length of approximately 1 mm at most in the tracking direction. In such a range where the servo control loses its stability, the write operation would be retried due to the occurrence of tracking errors or track jumps and defect replacement processing would be performed due to the occurrence of write errors, thus taking a long time to get the write operation done. In that case, some of the data that should have been written could be missing or it might take a longer amount of time to get dubbing done.

Furthermore, even if there is only one bubble on a single track of a BD, then some clusters could be accessed but others could not. For example, there are just two clusters on the innermost track. That is why if access to one of the two clusters failed, then that track could become entirely inaccessible. For that reason, taking such a worst-case scenario into consideration, an area that covers multiple inaccessible tracks will be referred to herein as a "large-scale defective area **14".** As described above, the number of clusters included in several hundreds of tracks could reach several thousands. It should be noted that the large-scale defective area **14** could also include accessible clusters. In that case, the large scale defective area **14** could be defined on a cluster-by-cluster basis. The large-scale defective area is defined herein to be an "area that covers multiple inaccessible tracks" but does not always have to cover multiple tracks. Even if there is only one inaccessible track, that track could also make a "large-scale defective area".

FIG. **17** shows the procedure of operations to be done in a situation where write processing has been carried out by a conventional method on a large-scale defective area. Specifically, the procedure of operations includes the processing steps of:

  **a.** writing data on clusters in a user data area (User Area);
  **b.** failing to write data on a cluster **U** in the user data area;
  **c.** choosing a substitute area **S** within the spare area as a replacement area, moving the optical head (to perform a seek operation) and writing data on the substitute area **S** as a replacement area; and
  **d.** moving to the next cluster U+1 but failing to write data on that cluster U+1 again (b').

These processing steps **c** and **d** are carried out over and over again until the large-scale defective area is passed. In this manner, when the relocation operation is performed, the optical head has to move back and forth between the user data area and the spare area (i.e., a seek operation has to be performed) frequently, thus taking a huge amount of processing time.

Meanwhile, Patent Document No. 1 cited above teaches a technique for defining a defective area to be an area that has a predetermined length as measured from a location where a defect has been detected and substituting a fixed-length replacement area for that defective area, instead of substituting a replacement area for each defect detected.

Nevertheless, if such a fixed-length replacement area is substituted, then another kind of problem will arise.

FIG. **18** illustrates the processing step **e** of defining a fixed-length area to be a defective area in a situation where write errors **b** and **b'** have occurred. In the example illustrated in FIG. **18,** the fixed-length area is smaller than the bubble area. That is why if data, of which the size exceeds that of the defective area defined by this processing step **e,** is going to be written, then a remaining defective area (or bubble area) needs to be accessed after the fixed-length area has been passed and writing of the data will fail (which is processing step **f).** As a result, the access time becomes longer, which is a problem.

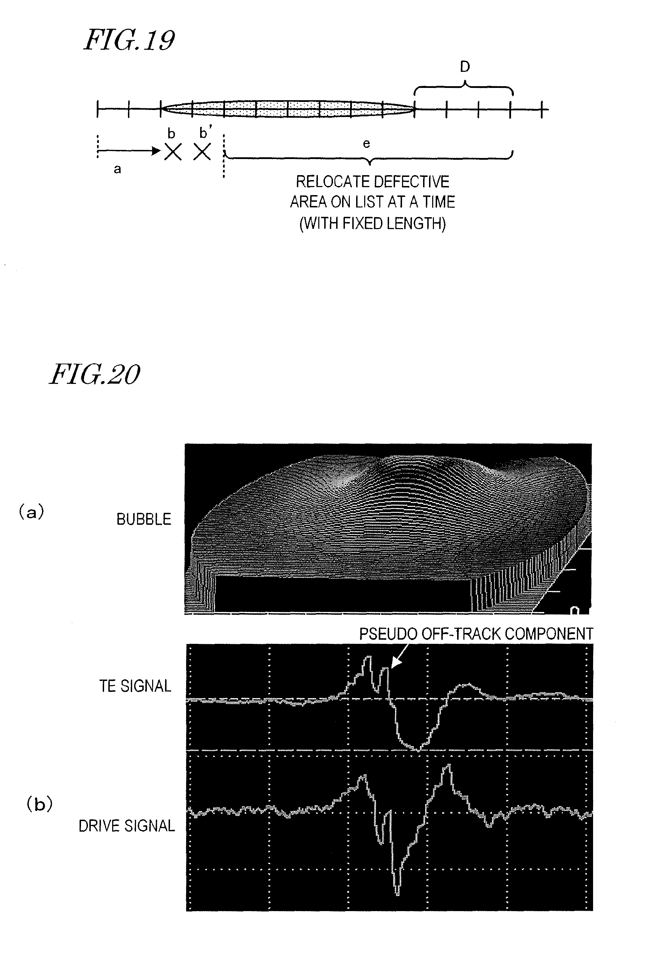

On top of that, another problem could happen. FIG. **19** illustrates an alternative processing step **e** of defining a relatively long fixed-length area to be a defective area in a situation where write errors **b** and **b'** have occurred. In that case, a replacement area with that fixed length is also assigned from the spare area. That is why if the fixed-length replacement area is larger than the bubble area, then the replacement area will reach even an area **D** with no defects. As a result, the spare area is wasted, which is also a problem.

Bubbles have various sizes. Therefore, if such a defect management method that defines a fixed-length area as a defective area is adopted, the problem shown in FIG. **18** or **19** could be caused.

Also, on a storage medium such as a BD, the spare area from which a replacement area can be assigned has a finite size. Even in a situation where the defect in question is not a bubble but dirt, if blocks that follow the defective block itself are always continuously treated as a defect (e.g., if there is a defect caused by widely and thinly spread dirt such as a fingerprint), then a lot of replacement areas will be defined one after another and the spare area will be used up in the blink of an eye.

Furthermore, if the bubble area is accessed as in the processing step **f** shown in FIG. **18,** then the light beam spot may jump from the target track, on which data should be written, to reach the adjacent track and possibly destroy the data stored there.

FIG. **20(a)** illustrates the unevenness formed on the surface of an optical disc due to the presence of a bubble, while FIG. **20(b)** shows the respective waveforms of a TE signal and a drive signal to be monitored when a light beam passes the bubble. While the light beam is following the centerline of the tracks, the amplitude of the TE signal is at zero level. However, as the light beam shifts from the centerline of the tracks in the disc radial direction, the TE signal comes to have non-zero amplitude components. In that case, to cancel the shift (which is so-called "off-track") of the light beam from the centerline of the tracks, the position of the objective lens in the optical pickup is adjusted in the disc radial direction. The position of the objective lens in the disc radial direction is adjusted by a lens actuator in the optical pickup. The drive signal shown in FIG. **20(b)** shows the waveform of drive current supplied to the lens actuator.

As shown in FIG. **20,** when the light beam crosses the bubble on the BD, the waveform of the TE signal comes to have a component representing a pseudo off-track phenomenon. Such a waveform component is produced due to the presence of a bubble even if the light beam does follow the centerline of the tracks. That is why such a component will be referred to herein as a "pseudo off-track component" of a TE signal. If such a pseudo off-track component were produced in the TE signal, the tracking control would be carried out in response to the pseudo off-track component and the light beam spot would come off the target track, which is a problem called "abnormal track jump".

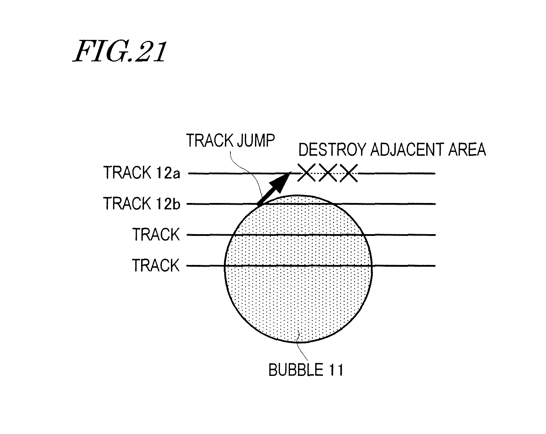

FIG. **21** schematically illustrates an abnormal track jump. That is to say, FIG. **21** shows that while data is being written on a track **12b,** the light beam spot happens to jump to an adjacent track **12a** due to the presence of a bubble **11.** In that case, the write processing will be continued on the wrong track **12a,** thus destroying the existent data there by mistake, which is a huge problem. For example, if AV data has been destroyed, the playback will temporarily come to a halt. On the other hand, if management information that is indispensable for playback has been destroyed, then a recorded content could not be played back anymore. Or in a worst-case scenario, no data could be readable at all from that optical disc.

It is therefore an object of the present invention to determine whether or not a write error that has occurred while data is being written has been produced due to the presence of a large-scale defective area such as a bubble and, if the error has been caused for such a reason, to perform relocation processing according to the size of that large-scale defective area.

## MEANS FOR SOLVING THE PROBLEMS

An optical disc apparatus according to the present invention detects an error that has been caused due to the presence of a defective area in a storage area of an optical disc while data is being written on that storage area and continues to write the data on a replacement area that substitutes for the defective area. The apparatus includes: an optical pickup for irradiating the optical disc with a light beam and generating a light intensity signal based on the light beam that has been reflected from the optical disc; a writing control section for controlling writing of data onto the storage area of the optical disc by driving the optical pickup; a defect determining section for determining, if an error has occurred on the storage area while the data is being written there, the storage area to be a defective area and measuring the size of the defective area; and a defect management section for instructing the writing control section to assign a replacement area of the size that has been determined based on the measured one of the defective area on the optical disc in accordance with an instruction to write the data and then to continue to write the data on the replacement area that has been assigned.

A number of tracks may be arranged on the optical disc. If the error has occurred, the defect determining section may instruct the optical pickup to access the tracks intermittently, thereby determining an area on which a predicted type of error has occurred to be the defective area.

The writing control section may detect a servo error by determining how long the signal level of a servo signal, generated based on the light intensity signal, is higher than a predetermined threshold value. And the defect determining section may determine an area where the servo error has occurred to be a defective area.

The defect determining section may instruct the optical pickup to access the tracks at predetermined regular intervals, and may determine an area where servo errors have occurred a number of times to be the defective area.

The writing control section may be able to detect a servo error based on a servo signal that has been generated from the light intensity signal. And if the error is a servo error that has occurred during a seek operation, the defect determining section may start to measure the size of the defective area.

If the error is a data write error and if such write errors have occurred a predetermined number of times, the defect determining section may start to measure the size of the defective area.

Based on the measured size of the defective area and the size of the data, the defect management section may assign a replacement area, of which the size is equal to or smaller than that of the defective area, on the optical disc.

The defective area may be an area with a bubble that was produced when the optical disc was made.

The defective area may cover a number of tracks on the optical disc.

The defect management section may assign a replacement area, of which the size is the same as the measured one of the defective area, on the optical disc.

Alternatively, the defect management section may assign a replacement area, of which the size is the same as the smaller one of the measured size of the defective area and the size of the data yet to be written, on the optical disc.

A user data area and a spare area may be provided on the optical disc, and the defect management section may find the replacement area in the spare area.

Alternatively, a user data area and a spare area may be provided on the optical disc, and the defect management section may find the replacement area in the user data area.

If an error has occurred while data is being written on the replacement area, the defect management section may instruct the writing control section to find another replacement area within the spare area and to continue to write the data on that another replacement area found.

Alternatively, if an error has occurred while data is being written on the replacement area, the defect management section may instruct the writing control section to find another replacement area of a predetermined size within the spare area and to continue to write the data on that another replacement area found.

## EFFECTS OF THE INVENTION

If an error has occurred during a write operation, an optical disc apparatus according to the present invention determines a storage area where that error has occurred to be a defective area and measures the size of the defective area. Then, the apparatus assigns a replacement area, of which the size is equal to or smaller than that size measured, on an optical disc and manages the storage area such that no data will be written on that defective area.

Since the size of the replacement area is defined to be equal to or smaller than the measured one of the defective area, the spare area is never wasted but can be used efficiently. For example, if the remaining data yet to be written has a size that is equal to or smaller than the measured one of the defective area, then a replacement area of the same size as the defective area is found during the write operation and the remaining data is written on that replacement area. On the other hand, if the remaining data has a bigger size than the defective area measured, then a replacement area of the same size as the defective area is assigned first, part of data is written on that replacement area, and then the rest of the data is written on a normal storage area that follows the defective area. In this manner, the use of the spare area can be minimized (i.e., used neither excessively nor insufficiently), and the entire storage area of the optical disc can be used efficiently.

## BRIEF DESCRIPTION OF DRAWINGS

FIGS. **1(a)** and **1(b)** illustrate writing methods according to a preferred embodiment of the present invention, FIG. **1(c)** illustrates another writing method according to the preferred embodiment, and FIG. **1(d)** illustrates a writing method to take in a situation where two bubble areas are encountered while a series of data is being written.

FIG. **2** illustrates the arrangement of functional blocks in a BD recorder **100** as a preferred embodiment of the present invention.

FIG. **3** illustrates an exemplary hardware configuration for an optical disc drive **102** as a preferred embodiment of the present invention.

FIG. **4** is a flowchart showing a procedure in which write processing, including the processing step of replacing a large-scale defective area, should be performed by the optical disc drive **102**.

FIG. **5** is a flowchart showing the detailed procedure of the processing step **S47** of provisionally detecting a large-scale defective area and measuring the size of the provisionally detected defective area as shown in FIG. **4.**

FIG. **6(a)** illustrates the concept of how the bubble measuring processing steps **S56** through **S58** shown in FIG. **5** should get done and FIG. **6(b)** illustrates, in time series, how the error detection processing gets done.

FIG. **7** shows the waveform of a tracking error signal with a servo failure.

FIG. **8(a)** shows the model and equation for calculating the execution time it takes when a conventional defect processing method is adopted and FIG. **8(b)** shows the model and equation for calculating the execution time it takes when the defect processing method of this preferred embodiment is adopted.

FIG. **9** shows how the execution times **Ta** and **Tb** change according to the number of clusters to process.

FIG. **10** shows how the execution times **Ta** and **Tb** change according to the number of clusters to process.

FIG. **11** illustrates a layout of respective areas on the storage layer **21** of a conventional rewritable optical disc.

FIG. **12** illustrates a layout of respective areas on the storage layer **31** of a DVD-R, which is a conventional write-once optical disc.

FIG. **13** illustrates a layout of respective areas on the storage layer **41** of a conventional write-once optical disc including defect management information.

Portion **(a)** of FIG. **14** is a schematic representation of a BD **10** with bubbles **11** and portion **(b)** of FIG. **14** is an enlarged view thereof showing a relation between the bubbles **11** and tracks on the BD **10.**

FIGS. **15(a)** and **15(b)** illustrate the shape of a raised portion that was actually formed on the disc surface of a BD (i.e., on the surface of its light transmitting layer) due to the production of a bubble.

FIG. **16** illustrates the constitution of a large-scale defective area (bubble area) **14.**

FIG. **17** shows the procedure of operations to be done in a situation where write processing has been carried out by a conventional method on a large-scale defective area.

FIG. **18** illustrates the processing step **e** of defining a fixed-length area to be a defective area in a situation where write errors **b** and **b'** have occurred.

FIG. **19** illustrates an alternative processing step **e** of defining a relatively long fixed-length area to be a defective area in a situation where write errors **b** and **b'** have occurred.

FIG. **20(a)** illustrates the unevenness formed on the surface of a disc by a bubble, and FIG. **20(b)** shows the respective waveforms of a TE signal and a drive signal to be monitored when a light beam crosses the bubble.

FIG. **21** schematically illustrates an abnormal track jump.

## DESCRIPTION OF REFERENCE NUMERALS

| | |
|---|---|
| **100** | BD recorder |
| **102** | optical disc drive |
| **104** | CPU |
| **106** | encoder/decoder |
| **108** | tuner |
| **110** | instruction processing section |
| **120** | writing control section |
| **130** | reading control section |
| **140** | defect management section |
| **150** | large-scale defect determining section |
| **160** | buffer |
| **160a** | defect management information buffer |
| **160b** | data buffer |
| **160c** | large-scale defect information buffer |
| **160d** | large-scale defect provisionally detected information buffer |
| **170** | I/O bus |

## BEST MODE FOR CARRYING OUT THE INVENTION

Hereinafter, preferred embodiments of an optical disc apparatus according to the present invention will be described with reference to the accompanying drawings.

In a situation where an error caused by the presence of a defective area on an optical disc (typically a BD), for example, has been detected while data is being written on the disc, a defect management method according to the present invention is used to assign a replacement area to substitute for the defective area from a spare area and then write data on that replacement area.

If an error has occurred while data is being written, the defect determining section of the optical disc apparatus determines a storage area where the error has occurred to be a defective area and measures the size of that defective area. Then, in accordance with an instruction to write data, the defect management section thereof assigns a replacement area, of which the size has been determined by the measured one of the defective area, on the optical disc and manages the storage area so that no data will be written on that defective area.

The defective area may be a bubble area, which was produced when the protective coating of the optical disc was formed by a spin coating process and in which a data read/write operation will be affected by a bubble that entered the protective coating.

No data can be written at all on the bubble area detected, or at least it takes too much time to get data read or written from/on such an area. That is why such a bubble area cannot be used for writing.

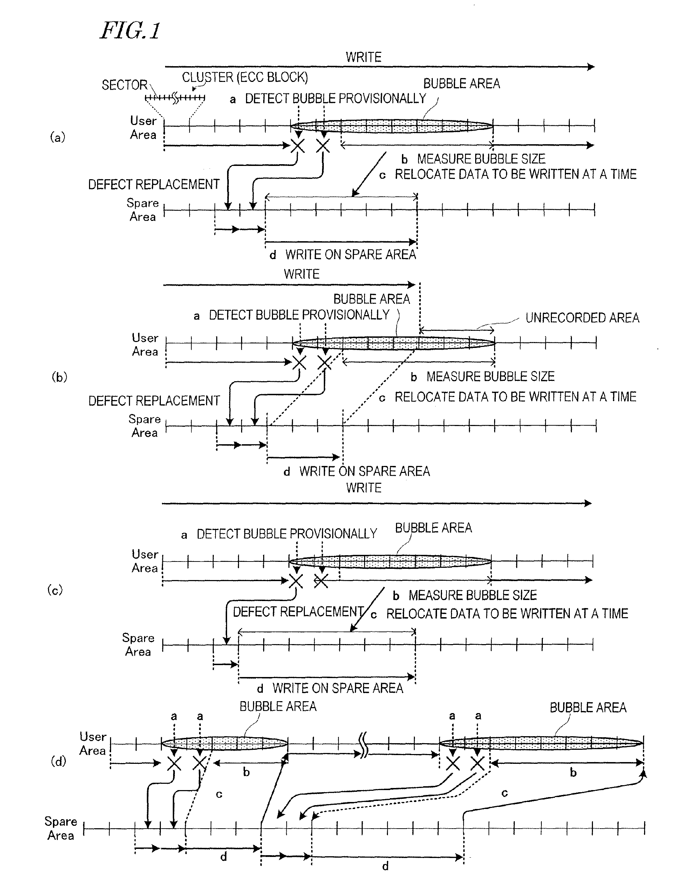

Hereinafter, it will be described in detail with reference to FIG. **1** how to carry out the defect management method including measurements on the bubble area.

FIG. 1**(a)** illustrates a first writing method according to this preferred embodiment. This drawing is illustrated just like FIG. **17** already referred to in the background section. The minimum unit of the user data area (User Area) is one cluster (or one ECC block). A single cluster consists of a number of sectors.

In the following description of preferred embodiments, the size of the defective area is supposed to be measured on a cluster basis as an example. However, the size of the defective area may also be measured on a sector basis. In that case, the size of the defective area may be roughly measured on a cluster basis first, and then finely measured on a sector basis.

Suppose a write error has occurred as indicated by the cross x while data is being written on the user data area. Then, the area where the error has occurred is determined to be a defective area and the data will be written on a replacement area within the spare area instead. After this relocation operation is finished, a write error occurs again while data is going to be written on the next cluster of the user data area. In that case, that area is determined to be defective area again and the data that should have written there is written on a replacement area within the spare area.

In the example illustrated in FIG. 1**(a)**, if write errors have occurred twice in a row, then the process advances to the processing step of measuring such a large-scale defective area that has been produced due to the presence of a bubble. In this sense, the processing step **a** shown in FIG. **1** is a pre-processing step to be carried out before the bubble detecting processing step and will be referred to herein as a "provisional bubble detecting processing step **a**".

The large-scale defective area measuring processing step b is started on the next cluster that follows the two clusters in which this area has been detected as a large-scale defective area.

The large-scale defective area measuring processing step **b** may be carried out by accessing the tracks discretely at regular intervals of 10 $\mu$m, for example, until a track that produces no servo errors is encountered. Then, the large-scale defective area is determined to reach the previous track that is located just before the track where no servo errors occur and has its size measured. According to this preferred embodiment, such a large-scale defective area is regarded as a bubble area.

Once the large-scale defective area has been located, information about that area is stored in a buffer. If a request to write data on that large-scale defective area has been received, then the processing step of listing that area as a defective area and the processing step **c** of assigning a replacement area that has the same data size as the large-scale defective area are carried out. Thereafter, the processing step **d** of writing the remaining data on the replacement area is performed. After that, the data starts to be written right after the bubble area has been passed.

FIG. **1(b)** illustrates a writing method to take in a situation where the write operation is supposed to be finished halfway through the large-scale defective area. The difference from the method shown in FIG. **1(a)** lies in how to assign a replacement area in a situation where the size of the remaining data, except the data that has already been written, in the overall data to be written is equal to or smaller than that of the large-scale defective area. That is to say, the processing step **c** of assigning a replacement area, of which the size corresponds with the size of the remaining data to be written on the large-scale defective area, is performed and then the processing step **d** of writing the remaining data on the replacement area assigned is carried out. Optionally, part of the large-scale defective area, for which no write request has been received (i.e., the unrecorded area shown in FIG. **1(b)**) may be listed as a defective area.

FIG. **1(c)** illustrates a second writing method according to this preferred embodiment. The difference from the method shown in FIG. **1(a)** lies in that if a write error has occurred for the second time, no relocation is performed on the spare area but the processing step **b** of measuring the large-scale defective area is carried out. The large-scale defective area measuring processing step **b** is started from the cluster of the large-scale defective area where the write error has occurred for the second time. The rest of the processing is carried out in the same way as in the processing steps **c** and **d** shown in FIG. **1(a).**

As can be seen easily from FIGS. **1(a)** through **1(c),** the size of the replacement area to assign for relocation is not fixed but variable according to the size of the remaining data to be written and the size of the large-scale defective area.

Next, FIG. **1(d)** illustrates a writing method to take in a situation where two bubble areas are detected while a series of data is being written. In FIG. **1(d),** the reference sign **a** denotes the provisional bubble detecting processing step, **b** denotes the bubble measuring processing step, **c** denotes the processing step of assigning a replacement area at a time for the data to be written, and **d** denotes the spare area writing processing step as shown in FIGS. **1(a)** through **1(c).**

In the example illustrated in FIG. **1(d),** every time a bubble is detected, the processing shown in FIG. **1(a)** is carried out. As a result, a replacement area of the same size as the measured one of the bubble is assigned each time and data is written on that replacement area assigned. Similar operations are performed even in a situation where there are three or more bubble areas. In FIG. **1(d),** the replacement areas to substitute for those bubble areas are adjacent to each other. However, this is just an example. Alternatively, a replacement area for any other user data area may be interposed between them, too.

In the preferred embodiment described above, the large-scale defective area is supposed to be a bubble area. This is because bubbles are currently considered to be the most dominant factor in producing the large-scale defective areas. Naturally, however, if a large-scale defective area is produced due to a different factor other than bubbles, the large-scale defective area does not have to be regarded as a bubble area. The present invention is applicable to such a situation by replacing the "bubble area" with a "large-scale defective area" and the "bubble" with that another factor in the following description.

Hereinafter, the configuration and operation of an optical disc apparatus according to this preferred embodiment will be described in detail.

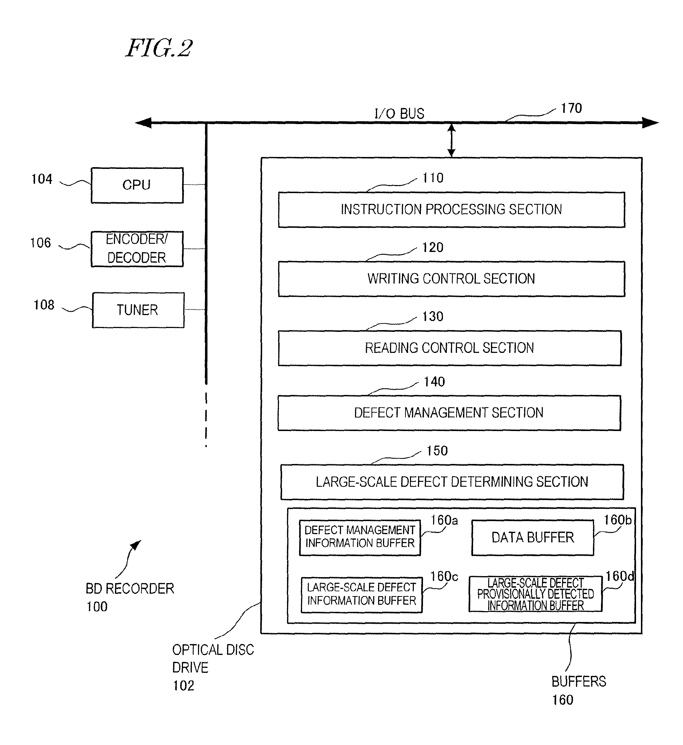

FIG. **2** illustrates the arrangement of functional blocks in a BD recorder **100** as a preferred embodiment of the present invention. The BD recorder **100** reads and writes data from/on a BD as an exemplary optical disc (which is typically a rewritable BD (not shown)).

The BD recorder **100** includes an optical disc drive **102,** a central processing unit (CPU) **104,** an encoder/decoder **106,** a tuner **108,** and an I/O bus **170** that enables these components to communicate with each other.

The CPU **104** is a host computer that controls the overall operation of the BD recorder **100** and that is also called a "high-order controller" with respect to the optical disc drive **102.** The encoder/decoder **106** encodes and decodes video and audio. The tuner **108** receives analog or digital broadcasting waves and acquires a TV program signal.

The optical disc drive **102** includes an instruction processing section **110,** a writing control section **120,** a reading control section **130,** a defect management section **140,** a large-scale defect determining section **150,** and buffers **160.**

The instruction processing section **110** processes an instruction that the section **110** has received through the bus **170.** The writing control section **120** controls writing of data on the optical disc. And the reading control section **130** controls reading of data from the optical disc.

The defect management section **140** performs processing on defect management information. Specifically, the defect management section **140** reads defect management information from the optical disc and stores it in the defect management information buffer **160a** to be described later. Also, if the defect information has changed, the defect management section **140** updates not only the defect management information but also the contents of the defect management information buffer **160a** as well. Then, the updated defect management information is written on the optical disc.

The large-scale defect determining section **150** determines whether or not the given defective area is one of various types of large-scale defective areas such as a bubble area. If the given defective area has turned out to be a large-scale defective area, the large-scale defect determining section **150** generates or updates large-scale defect information to define its continuous area and stores it in the large-scale defect information buffer **160c.**

The buffers **160** include the defect management information buffer **160a,** a data buffer **160b,** the large-scale defect information buffer **160c** and the large-scale defect provisionally detected information buffer **160c.** The defect management information buffer **160a** stores the defect management information that has been read from the optical disc. The data buffer **160b** temporarily stores the data to be written and the read data. The large-scale defect information buffer **160c** stores the large-scale defect information that has been generated as a result of the decision made by the large-scale defect determining section **150.** And the large-scale defect provisionally detected information buffer **160d** stores information about the area where the write error has occurred and that has been spotted by the large-scale defect determining section **150.**

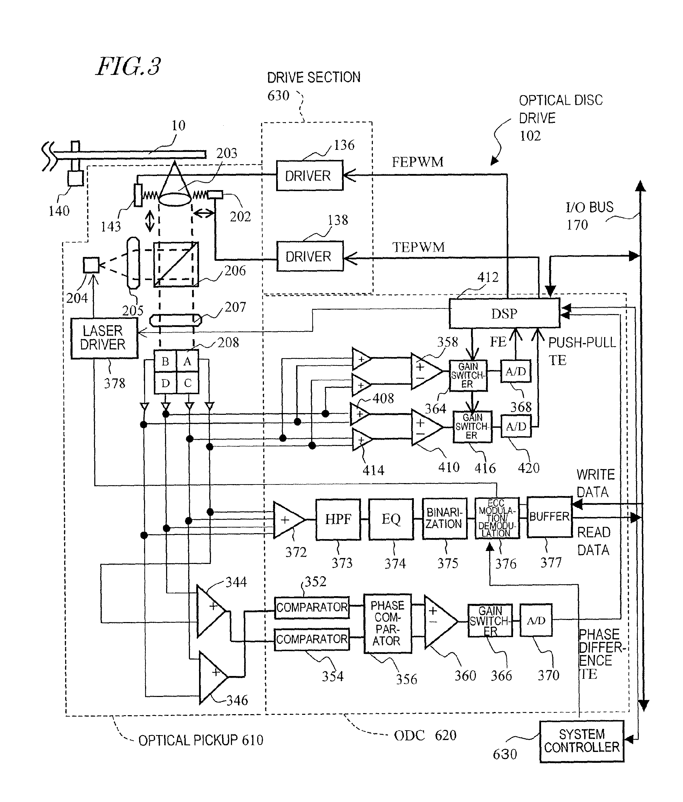

FIG. **3** illustrates an exemplary hardware configuration for the optical disc drive **102** of this preferred embodiment.

The optical disc drive **102** includes a disc motor **140,** an optical pickup **610,** an optical disc controller (ODC) **620,** a drive section **630** and a system controller **630.**

The system controller **630** controls the overall operation of the optical disc drive **102** in accordance with a control program installed.

The optical pickup **610** includes a light source **204,** a coupling lens **205,** a polarization beam splitter **206,** an objective lens **203,** a condenser lens **207** and a photodetector **208.**

The light source **204** is preferably a semiconductor laser diode, which emits a light beam with a wavelength of **415** nm or less in this preferred embodiment. The light beam emitted from the light source **204** is linearly polarized light, of which the polarization direction can be arbitrarily controlled by turning the light source **204** around the optical axis of the light beam emitted. The coupling lens **205** transforms the light beam that has been emitted from the light source **204** into a parallel beam, which is then incident on the polarization beam splitter **206**. The polarization beam splitter **206** has such a property as to reflect linearly polarized light that is polarized in a particular direction but to transmit linearly polarized light that is polarized perpendicularly to that particular direction. The polarization beam splitter **206** of this preferred embodiment is designed so as to reflect the light beam that has been transformed by the coupling lens **205** into the parallel beam toward the objective lens **203**. The objective lens **203** converges the light beam that has been reflected by the polarization beam splitter **206,** thereby forming a light beam spot on the storage layer of the BD **10**.

The light beam that has been reflected from the BD **10** is transformed by the objective lens **203** of the optical pickup **610** into a parallel light beam, which is then incident on the polarization beam splitter **206**. In this case, the light beam has had its polarization direction rotated 90 degrees with respect to the polarization direction of the light beam that was incident on the BD **10**. That is why the light beam is transmitted through the polarization beam splitter **206** and then incident on the photodetector **208** as it is by way of the condenser lens **207**.

The photodetector **208** receives the light that has passed through the condenser lens **207** and converts the light into an electrical signal (specifically, a current signal). The photodetector 208 shown in FIG. **3** has its photosensitive plane divided into four areas **A, B, C** and **D,** each of which outputs an electrical signal representing the intensity of the light received there.

To have the light beam spot follow the target track on the storage layer of the BD **10** that is being turned at a predetermined velocity by the disc motor **140,** a tracking error (TE) signal representing the magnitude of a tracking error and a focus error (FE) signal representing the magnitude of a focus error need to be generated based on the light beam that has been reflected from the BD **10**. These signals are generated by the ODC **620**.

As for the TE signal, the optical disc drive **102** generates a TE signal by the push-pull method during writing and by the phase difference method during reading, respectively.

The optical disc drive **102** of this preferred embodiment is characterized by the type of processing to perform when detecting an error while writing data on the optical disc. That is why the processing of generating a push-pull TE signal will be described first.

An adder **408** of the ODC **620** outputs a sum signal of the areas **B** and **D** of the photodetector **208,** while an adder **414** outputs a sum signal of the areas **A** and **C** of the photodetector **208**. A differential amplifier **410** receives the outputs of these two adders **408** and **414** and outputs a push-pull TE signal representing their difference. A gain switcher **416** adjusts the amplitude of the push-pull TE signal to a predetermined one (gain). An A/D converter **420** converts the push-pull TE signal supplied from the gain switcher **416** into a digital signal and passes it to a DSP **412**.

On the other hand, the phase difference TE signal can be obtained in the following manner. Specifically, the adder **344** may output a sum signal A+D, of which the magnitude corresponds with the sum of the outputs of the areas **A** and **D,** while the adder **346** may output a sum signal B+C, of which the magnitude corresponds with the sum of the outputs of the areas **B** and **C,** for example. Alternatively, other signals may also be generated if the sums are calculated differently.

Comparators **352** and **354** digitize the output signals of the adders **344** and **346,** respectively. A phase comparator **356** compares the phases of the output signals of the comparators **352** and **354** to each other. A differential amplifier **360** receives the output signal of the phase comparator **356** and outputs a phase difference TE signal, which is used to perform a control operation that makes the light beam follow the right track on the optical disc **102**.

A gain switcher **366** adjusts the amplitude of the phase difference TE signal to a predetermined value. An A/D (analog-to-digital) converter **370** converts the phase difference TE signal supplied from the gain switcher **366** into a digital signal.

The FE signal is generated by the differential amplifier **358**. The FE signal may be detected by any methodby an astigmatism method, a knife edge method or even a spot sized detection (SSD) method. The circuit configuration may be changed appropriately according to the detection method adopted. A gain switcher **364** adjusts the amplitude of the FE signal to a predetermined value. An A/D converter **368** converts the FE signal supplied from the gain switcher **364** into a digital signal.

A DSP **412** controls the drive section **630** based on the TE and FE signals. A control signal **FEPWM** for focus control and a control signal **TEPWM** for tracking control are respectively output from the DSP **412** to the drivers **136** and **138** of the drive section **630**.

In accordance with the control signal FEPWM, the driver **136** drives the focus actuator **143,** which moves the objective lens **203** substantially perpendicularly to the storage layer of the optical disc **102**. On the other hand, in accordance with the control signal TEPWM, the driver **138** drives the tracking actuator **202,** which moves the objective lens **203** substantially parallel to the storage layer of the optical disc **102**. It should be noted that the drive section **630** further includes a driver (not shown) for driving a transport stage on which the optical pickup **610** is mounted. By driving the transport stage with a voltage applied to the driver, the optical pickup **610** can move to any arbitrary location in the radial direction.

Next, a configuration for reading data will be described.

An adder **372** adds together the respective outputs of the areas **A, B, C** and **D** of the photodetector **208,** thereby generating an all sum signal (A+B+C+D), which is then input to the HPF **373** of the ODC **620.**

The all sum signal has its low frequency component filtered out by the HPF **373,** is passed through an equalizer section **374,** is binarized by a binarization section **375,** is subjected to PLL, error correction, demodulation and other processing by an ECC modulator/demodulator **376** and then is temporarily stored in a buffer **377.** The capacity of the buffer **377** has been determined with various playback conditions taken into account.

The data in the buffer **377** is read at the timing of playing back video, for example, and then output as read data to a host computer **104** and an encoder/decoder **106** (see FIG. **2**) by way of an I/O bus **170.** In this manner, video or any other type of data can be played back.

Next, a configuration for writing data will be described.

The data stored in the buffer **377** is provided with an error correction code by the ECC modulator/demodulator **376** to be encoded data. Subsequently, the encoded data is modulated by the ECC modulator/demodulator **376** to be modulated data, which is then input to a laser driver **378.** And the laser driver **378** controls the light source **204** based on the modulated data, thereby modulating the power of the laser beam.

The correspondence between FIGS. **2** and **3** will be described. The instruction processing section **110** shown in FIG. **2** corresponds to the system controller **630** shown in FIG. **3.**

The function of the writing control section **120** shown in FIG. **2** is also performed by the system controller **630** that receives data to be written and instructs how and where to write it. Also, the writing control section **120** includes the tracking signal generating section for generating the push-pull TE signal shown in FIG. **3** in the ODC **620** (including the adders **408, 414,** differential amplifier **410,** gain switcher **416** and A/D converter **420)** and the focus signal generating section for generating the FE signal (including the adder, differential amplifier **358,** gain switcher **364** and A/D converter **368).** The writing control section **120** further includes the drive section **630.** And the writing control section **120** includes even the ECC modulator/demodulator **376** and the laser driver **378.**

The function of the reading control section **130** shown in FIG. **2** is also performed by the system controller **630** that instructs how and where to read data. The reading control section **130** includes the components **372** through **376** shown in FIG. **3** for obtaining read data. The reading control section **130** also includes the components **354** through **370** for generating a phase difference TE signal and the focus signal generating section for generating an FE signal. The reading control section **130** further includes the drive section **630.**

The defect management section **140** and the large-scale defect determining section **150** shown in FIG. **2** perform part of the processing done by the system controller **630.**

The data buffer **160b** shown in FIG. **2** corresponds to the buffer **377** shown in FIG. **3.** The defect management information buffer **160a,** large-scale defect information buffer **160c,** and large-scale defect provisionally detected information buffer **160d** shown in FIG. **2** correspond to the buffers (not shown) in the system controller **630.**

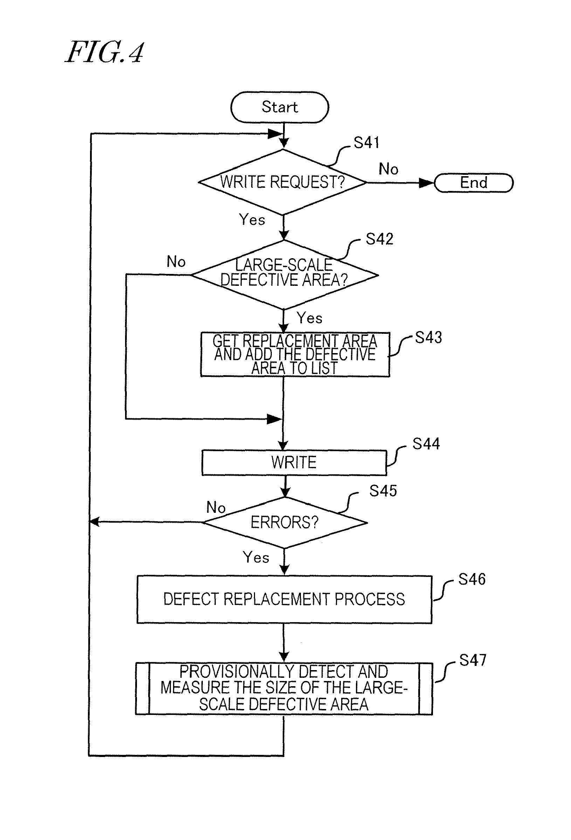

Hereinafter, it will be described with reference to FIGS. **4** through **7** how this optical disc drive **102** operates.

FIG. **4** shows the procedure in which the write processing, including the processing step of replacing a large-scale defective area, should be performed by the optical disc drive **102.** First of all, when the instruction processing section **110** receives a write command from a high-order controller such as the CPU **104,** the processing starts.

Next, in Step **S41,** the writing control section **120** determines whether or not data of the required size has been written yet. If there is still any remaining data yet to be written, the process advances to Step **S42.** On the other hand, if there is no data yet to be written, then the process ends.

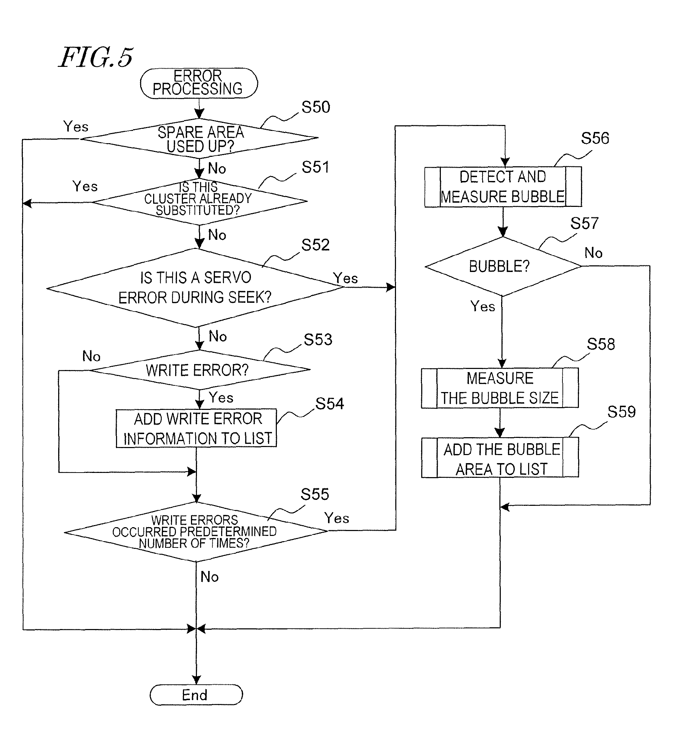

In Step **S42,** by reference to the large-scale defective area information that is stored in the large-scale defect information buffer **160c,** the defect management section **140** determines whether the area on which data is going to be written is a bubble area or not. The large-scale defective area information gets stored in the processing step **S59** shown in FIG. **5** as will be described in detail later with reference to FIG. **5.** If the answer is YES, the process advances to Step **S43.** Otherwise, the process jumps to Step **S44.**

In Step **S43,** the defect management section **140** assigns a replacement area to substitute for that defective area and adds the defective area to a defect list. In this processing step, the replacement area to substitute for the large-scale defective area is preferably continuous.

Next, in Step **S44,** the writing control section **120** writes the data. Thereafter, in Step **S45,** the writing control section **120** determines whether or not an error has occurred. If no error has occurred, the series of processing steps that starts with the processing step **S41** is performed all over again. On the other hand, if any error has occurred, then the process advances to Step **S46.**

In this case, the "error" refers to any of various sorts of errors. Examples of those errors include a write error that has been spotted as a result of a verification process, a servo control error that has been produced due to a failure of a focus control or a tracking control during a write operation, and a seek error that will occur while the optical pickup

610 is being moved toward a target location where data should be written. As used herein, the "verification process" refers to the process of verifying if data has been written properly by reading the data that has been written on a cluster and comparing the read data to the original data to be written.

In Step **S46,** a defect replacement process is carried out on the storage area on which an error has been spotted in the previous processing step **S45.** That is to say, a replacement area to substitute for the defective area is assigned from the spare area, the defective area is added to the defect list, and the data is written on the replacement area instead.

Next, in Step **S47,** the large-scale defect determining section **150** provisionally detects the large-scale defective area and measures the size of the provisionally detected defective area. This processing step will be described in further detail with reference to FIG. **5**.

FIG. **5** shows the detailed procedure of the processing step **S47** of provisionally detecting a large-scale defective area and measuring the size of the provisionally detected defective area as shown in FIG. **4**. As will be described in detail later, the BD recorder **100** locates an area that should probably be a bubble area, determines whether or not that area is really a bubble area, and then measures the size of that area if it has turned out to be a bubble area.

The area in question can be presumed to be a bubble area if a servo error has occurred (e.g., in a situation where a tracking control on a track in that area has failed), if write errors have occurred a predetermined number of times in a row, or if write errors have occurred a predetermined number of times within a particular area, for example.

First, in Step **S50,** the defect management section **140** determines whether or not the spare area has been used up. Since the spare area could be exhausted if too many bubble areas were replaced, it is necessary to monitor from time to time how much the spare area has been used so far. For example, if 75% or more of the spare area has already been used, then it is determined that the spare area has been exhausted to end the process. On the other hand, if less than 75% of the spare area has been used yet, then it is determined that the spare area has not been exhausted yet and the process advances to Step **S51**.

In Step **S51,** the defect management section **140** determines, by reference to the defect management information, whether or not the storage area where the error has occurred is a cluster that has already been subjected to the relocation processing. If the answer is YES, the process ends. Otherwise, the process advances to Step **S52.**

In Step **S52,** the large-scale defect determining section **150** determines whether or not the error is a seek error that has occurred while the optical pickup **610** is being moved toward the target location (i.e., the target area to write the data), thereby detecting the bubble area provisionally. As used herein, the "provisional detection" refers to the process of determining, by a predetermined condition, that there should probably be a bubble there, although it is still not quite clear if the error has really been caused due to the presence of a bubble.

If the seek operation has failed a predetermined number of times (e.g., 32 times) or if the seek operation has been done but if the tracking control on a track in that area has failed a predefined number of times (e.g., five times), then a bubble is probably there. In that case, to perform another processing step of seeing if there actually is a bubble there, the large-scale defect determining section **150** proceeds to the processing step **S56.** On the other hand, if no seek failures have been detected, then the process advances to Step **S53.**

In Step **S53,** the writing control section **120** determines whether or not the error, of which the occurrence has been confirmed in Step S45 shown in FIG. **4**, is a write error while the data is being written. If the answer is YES, the process advances to Step **S54.** Otherwise, the process jumps to Step **S55.**

In Step **S54,** the writing control section **120** adds information about the area where the write error has occurred (which will be referred to herein as "write error information") to the large-scale defect provisionally detected information buffer **160d.**

In Step **S55,** the large-scale defect determining section **150** provisionally detects the large-scale defective area by reference to the write error information that has been added in the previous processing step **S54.** For example, if write errors have occurred a predetermined number of times within a particular storage area (e.g., if write errors have occurred three times in fifteen clusters), the large-scale defect determining section **150** determines that storage area to be a large-scale defective area. Such a decision is made for the following reason. Specifically, since the write operation could not be done with good stability (i.e., sometimes could be done but sometimes could not be done) in respective clusters on a single track within the large-scale defective area, the degree of reliability should be increased and the processing would get done more quickly by advancing the processing as if write errors had occurred consecutively in such a situation.

If any large-scale defective area has been detected provisionally, the process advances to Step **S56.** Otherwise, the process ends.

Optionally, it may also be determined that the large-scale defective area has been detected provisionally

1) if write errors have occurred a predetermined number of times in a row;
2) if write errors have been caused by servo errors (such as failure to acquire the address, a tracking control failure or a focus control failure);

3) if the servo errors as stated in 2) have occurred a predetermined number of times in a row; or

4) if the servo errors as stated in 2) have occurred a predetermined number of times within a particular area.

The number of times the write errors have occurred can be defined by the number that has been stored in the large-scale defect provisionally detected information buffer **160d** in Step **S54.**

In the preferred embodiment described above, the write errors that have been caused due to the presence of a bubble area in the user data area are supposed to be detected. A cluster that has already been replaced should be excluded from the large-scale defective area to be detected provisionally because access to such a replaced cluster means access to the replacement area. It should be noted that if the processing step S55 is carried out by way of the processing step **S51,** the replaced cluster has already been removed from the large-scale defective area to be detected provisionally.

The processing steps **S56, S57** and S58 are carried out to determine whether or not there is a bubble area and to measure the size of the bubble area if any. But the optical disc drive is allowed just a short time for getting these processing steps done. This is because although these processing steps are performed with the data writing processing temporarily suspended, the write operation still needs to be done within a prescribed amount of time.

In the processing step **S56,** the large-scale defect determining section **150** determines whether or not there is a bubble area. In this preferred embodiment, the presence of a bubble is confirmed if a servo failure (or servo error) has occurred.

To determine the area in question to be a bubble area, a continuous defective area that covers a number of tracks needs to be detected. That is why the status of the neighboring tracks should be confirmed. Specifically, a location that is 10 tracks away from, and closer to the outer edge than, the location where the error has been detected is checked twice for any servo failures. If servo failures have been detected both times, then it is determined that there should be a bubble (or a servo failure). On the other hand, if no servo failures have been detected even when that location is checked three times, then it is determined that there should be no bubbles there and the measuring process ends.

A bubble is a typical defect of a big size. However, any other common defect such as a scratch could have a bigger size than a bubble. That is why it is difficult to distinguish a bubble defect from all the other common defects just by the size of that defect.

The big difference between bubbles and other common defects such as a scratch lies in the behavior of the servo control. For example, if a defect has been caused due to the presence of a fingerprint, the servo control does not fail normally and the write operation usually gets done properly on the target block. Nevertheless, the data that has been written there cannot be read as intended and an error is identified in many cases as a result of the verification process. Meanwhile, if a defect has been caused due to the presence of a scratch, the tracking servo control will fail completely to cause an error more often than not.

On the other hand, if there is a bubble, the tracking control will no longer be performed on the target track but will often be carried out an adjacent track by mistake. Particularly during a write operation, the tracking control will be performed on an adjacent recorded track to destroy the data stored there in many cases. That is why it is appropriate to determine, by detecting a servo failure by reference to the servo signal (or tracking signal), whether or not there is a bubble.

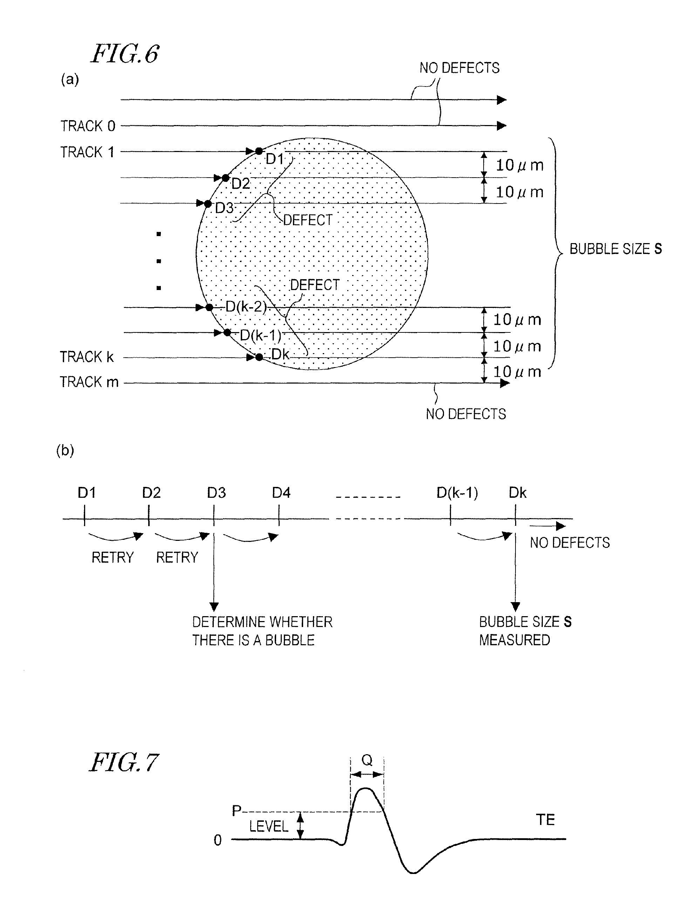

Hereinafter, such a processing step will be described in further detail with reference to FIGS. **6** and **7**.

First, in Step **S57,** the large-scale defect determining section **150** determines whether or not there is a bubble area. If the answer is YES, the process advances to Step **S58.** Otherwise, the process ends.

In Step **S58,** the size of the bubble area detected is measured. This processing step will also be described in further detail later with reference to FIGS. **6** and **7**.

Then, in Step **S59,** the defect management section **140** stores information about the size of the bubble area measured in the large-scale defect information buffer **160c.**

As for the processing steps **S56** through **S58,** the present inventors suppose these processing steps can be done in two different ways. One way is to confirm the presence of a bubble in Step S56 and then measure the overall size of that bubble (i.e., from the beginning through the end) in Step **S58** (which will be referred to herein as a "first way"). The other is to start measuring the size of a bubble on the supposition that the bubble should be there (which will be referred to herein as a "second way"). According to the second way, if it has been determined that there should be no bubbles during the bubble size measuring processing step, then the measuring process ends. The difference between these two methods lies in whether, after the presence of a bubble has been confirmed by a servo failure, the light beam spot should go back to the top of the bubble where a servo failure has occurred to measure the size of the bubble or should continue to follow the same track until the servo failure no longer occurs. In the following description, the bubble measuring operation in the first way will be described first, and then the bubble measuring operation in the second way will be described with reference to FIG. **6(b)**.

FIG. **6(a)** illustrates the concept of how the bubble measuring processing steps S56 through S58 shown in FIG. **5** should get done.

First, the processing step **S56** will be described. While data is being written on Track #0, no servo failure has occurred yet. However, on Track #1 where there is a bubble, a servo failure does occur due to the presence of a bubble.

A servo failure may be detected in the following manner, for example. FIG. **7** shows the waveform of a tracking error signal with a servo failure. The large-scale defect determining section **150** gets the TE signal for a period of time that is slightly longer than the time for making one round of the target track on the BD **10**. Then, the large-scale defect determining section **150** determines whether or not the TE signal includes a servo failure component caused by a track jump. For example, it is determined, by the amount of time **Q** it takes for the TE signal that has once exceeded a predetermined detection threshold value (or threshold level) **P** (which is greater than zero) to become equal to or smaller than P again, whether or not there is a servo failure. Alternatively, it may also be determined, by the amount of time **Q'** it takes for the TE signal that has once become lower than a predetermined detection threshold value (or threshold level) **P'** (which is smaller than zero) to become equal to or greater than P' again, whether or not there is a servo failure.

Now take a look at FIG. **6(a)** again. On detecting a defect **D1** by reference to the waveform of the TE signal, the large-scale defect determining section **150** instructs the optical pickup **610** to access a track that is located closer to the outer edge than the current track by a predetermined interval (of approximately 10 $\mu$m, for example). But on that next track, the large-scale defect determining section **150** detects another defect **D2**. That is why the large-scale defect determining section **150** also instructs the optical pickup **610** to access a track that is located even closer to the outer edge than the current track by a predetermined interval (of approximately 10 $\mu$m, for example). And on detecting still another defect **D3** there, the large-scale defect determining section **150** determines that there should be a bubble area there.

As a result, the processing step **S57** shown in FIG. **5** ends and the process advances to Step S58.

In Step **S58,** the size measuring processing step is carried out. Specifically, the large-scale defect determining section **150** goes back to the Track #1 where the servo failure occurred for the first time (see FIG. **6(a)**) and starts scanning there all over again. And the large-scale defect determining section **150** instructs the optical pickup to access one track after another at regular intervals (of 10 $\mu$m, for example) until the servo failure no longer occurs. In the example illustrated in FIG. **6(a),** servo failures continue to occur until Track #k but no longer occur on the next Track #m accessed. As a result, the bubble is presumed to cover at least Tracks #1 through #k.

The large-scale defect determining section **150** multiplies the number of those tracks that have been counted from the first track through the track where servo failures no longer occur (i.e., m in total) by the track interval of 10 $\mu$m, thereby calculating the size **S** of the bubble (=10·m $\mu$m). The size **S** of the bubble thus obtained is calculated so as to cover the range of Track #1 through the previous track adjacent to Track #m where servo failures no longer occur. It should be noted that these measurements are done with errors occurring while data is being written. That is why if it took too much time to get these measurements done, the write time would be too long or the remaining data to be written could not be buffered anymore. For that reason, the size of the bubble may be measured only within a predetermined range and the measurements may be closed once that range has been passed.

Since too much time cannot be spent to measure the size of the bubble area as described above, the target area is checked for any defects every 10 $\mu$m in this preferred embodiment. As a BD has a track pitch of 0.32 $\mu$m, it can be said that this range is checked approximately every 30 tracks (=10/0.32). As a result, the size of the bubble area can be measured much more quickly than checking the range on a track-by-track basis. Optionally, some tracks may still be checked for any servo failures on a track-by-track basis. For example, if Track #m where servo failures stop occurring has been detected as a result of checking the tracks every 10 $\mu$m, the intervening tracks between that Track #m and Track #k where a servo failure occurred for the last time may be checked for servo failures one by one. Then, the size of the bubble area can be measured more accurately.

In the foregoing description, when a track with no servo failures appears, it is determined that the bubble area has been passed to stop checking the tracks for servo failures. Alternatively, it may also be determined that the bubble area has been passed and the tracks no longer need be checked for servo failures unless tracks with no servo failures appear a predetermined number of times (e.g., three times) either discontinuously or continuously within a particular area. Meanwhile, considering the time for getting the checking process done, the upper limit of the overall length of the tracks to check should be set rather than waiting until a track with no servo failures appears. If a write operation needs to be performed on either the area that follows the measuring area or somewhere within a predetermined range of the measuring area after the measuring process has been closed with the upper limit set, the large-scale defective area determining processing step may be carried out once again to measure the size, and determine the location, of the large-scale defective area.

In the processing steps **S56** and **S58** described above, the tracks are supposed to be accessed at an interval of 10 $\mu$m. However, the tracks may also be accessed at different intervals in the respective processing steps. For example, the tracks may be accessed at an interval of 30 $\mu$m in Step **S56** and at an interval of 10 $\mu$m in Step **S58,** or vice versa.

Next, the bubble measuring operation in the second way will be described. FIG. **6(b)** illustrates, in time series, how the error detection processing gets done by performing the bubble measuring operation in the second way. After a servo failure **D1** has been detected, the tracks are checked for any servo failures at regular intervals of 10 $\mu$m. On detecting a servo failure **D3** for the third time, the large-scale defect determining section **150** determines that a bubble should be there. But unless that servo failure **D3** is detected, the bubble measuring processing step ends.

After that, the tracks are sequentially checked for servo failures at regular intervals of 10 $\mu$m. And if no servo failures are spotted from Track #m after the servo failure **Dk** has been detected, the large-scale defect determining section **150** determines that the end of the bubble area should be located between the track on which the servo failure **Dk** has occurred and Track #m that has been checked for the last time. In this manner, the size **S** of the bubble area can be determined almost accurately.

Optionally, the processing step **S56** of determining whether or not there is any bubble area may get done by checking only the tracks, belonging to the range that has been provisionally detected as a large-scale defective area, for servo failures.

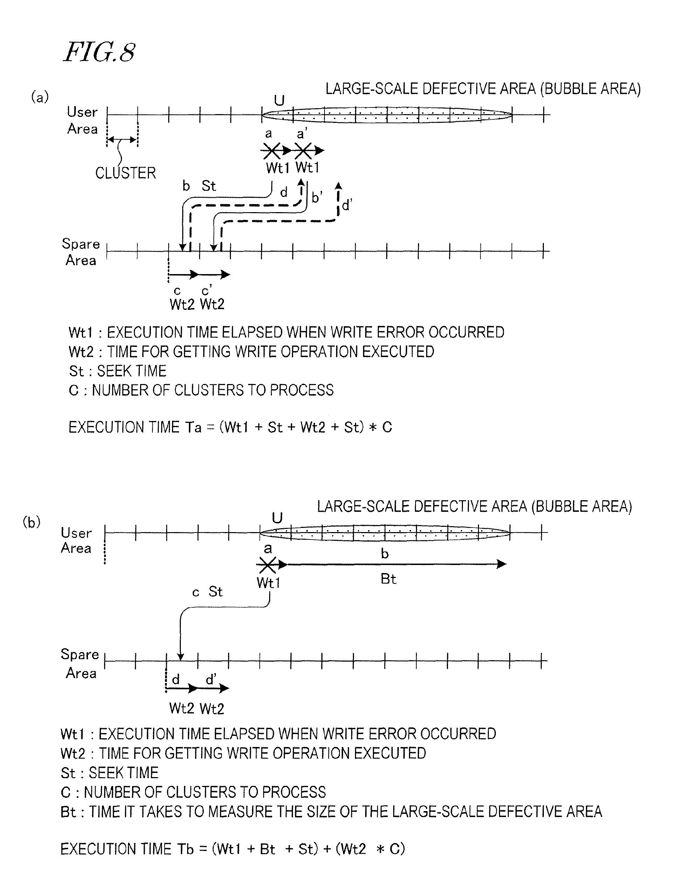

Hereinafter, the advantages of the bubble area measuring processing and defect processing of this preferred embodiment will be described with reference to FIGS. **8** to **10**.

FIG. **8(a)** shows the model and equation for calculating the execution time it takes when the conventional defect processing method is adopted. Supposing the time elapsed before a write error occurs is Wt1, the seek time it takes to move from the user data area to the spare area is St, the write time it takes to get a write operation done on the spare area is Wt2, and the number of write clusters is C, the execution time **Ta** is calculated by

$$Ta=(Wt1+St+Wt2+St)*C$$

On the other hand, FIG. **8(b)** shows the model and equation for calculating the execution time it takes when the defect processing method of this preferred embodiment is adopted. Supposing the time elapsed before a write error occurs is Wt1, the seek time it takes to move from the user data area to the spare area is St, the write time it takes to get a write operation done on the spare area is Wt2, the number of write clusters is C and the time it takes to measure the size of the large-scale defective area is Bt, the execution time **Tb** is calculated by

$$Tb=(Wt1+Bt+St)+(Wt2*C)$$

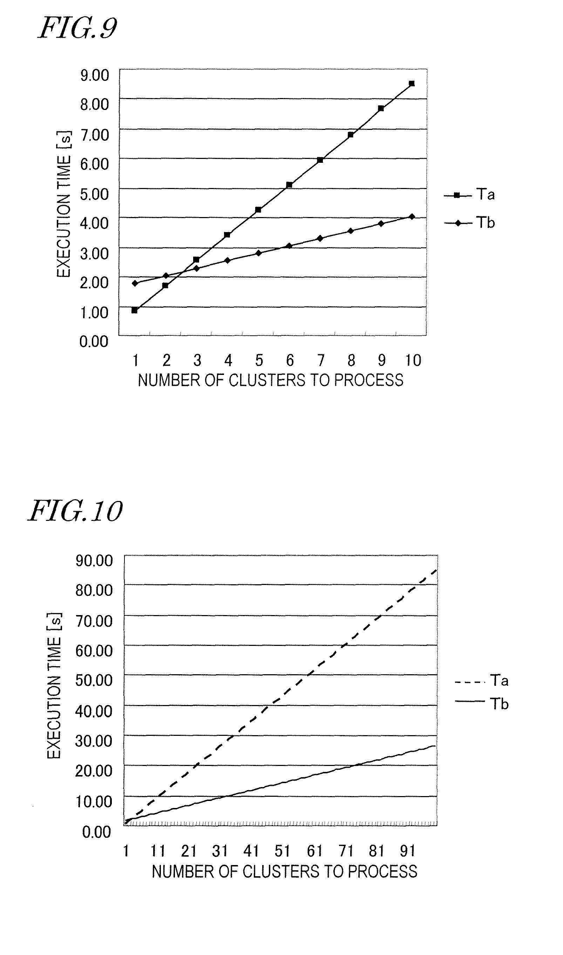

FIGS. **9** and **10** show how the execution times **Ta** and **Tb** change according to the number of clusters to process. The lines shown in FIGS. **9** and **10** are obtained if the parameters of the models mentioned above are defined as follows:

Wt1 (execution time elapsed when a write error occurs): 100 ms
Wt2 (execution time it takes to get a write operation done): 250 ms;
St (seek time): 250 ms; and
Bt (time it takes to measure the size of the large-scale defective area): 1,200 ms

As shown in FIGS. **9** and **10**, if the number of clusters to process is three or more, the defect processing method of this preferred embodiment would take a shorter execution time than the conventional method. Considering a situation where relocation needs to be carried out due to the occurrence of errors while data is being written, apparently the shorter the execution time, the better.

Furthermore, according to the writing method of this preferred embodiment, a replacement area is selected adaptively according to the size of the bubble area and that of the data to be written, and therefore, the spare area can be used more efficiently than the conventional method. In the preferred embodiment described above, the replacement area is supposed to be assigned from the spare area. However, this is just an example. Alternatively, the replacement area may also be assigned from the user data area.

Also, any arbitrary relocation method may be adopted when an error occurs while data is being written on a replacement area. For example, the defect management section **140** may instruct the writing control section **120** to find another replacement area within either the spare area or the user data area and continue to write the remaining data on that replacement area. In that case, the defect management section **140** may assign a replacement area of a fixed length. Alternatively, as in the preferred embodiments described above, the defect management section **140** may instruct the large-scale defect determining section **150** to measure the size of the replacement area where the error has occurred, thereby assigning another replacement area of the same size as the measured one.

In the preferred embodiments described above, the BD is supposed to be a rewritable optical disc (i.e., a so-called BD-RE). Alternatively, the BD may also be a write-once optical disc (i.e., a so-called BD-R).

**INDUSTRIAL APPLICABILITY**

If there is any large-scale defective area, including a bubble, for example, on an optical disc, an optical disc drive according to the present invention determines the size of that large-scale defective area by detecting servo control errors and relocates the data that should have been written in the defective area to a replacement area of the same size as the defective area. Since the servo control should lose stability in a bubble area, a read/write operation can be done with more stability by relocating the data to the bubble-free replacement area. On top of that, the size of the replacement area to be assigned is determined by the size of the bubble area measured. As a result, a minimum required part of the spare area can be used efficiently, or neither excessively nor insufficiently.

**Claims**

1. An optical disc apparatus for detecting an error that has been caused due to the presence of a defective area in a storage area of an optical disc while data is being written on that storage area and continuing to write the data on a replacement area that substitutes for the defective area, the apparatus comprising:

   an optical pickup for irradiating the optical disc with a light beam and generating a light intensity signal based on the light beam that has been reflected from the optical disc;
   a writing control section for controlling writing of data onto the storage area of the optical disc by driving the optical pickup;
   a defect determining section for determining, if an error has occurred on the storage area while the data is being written there, the storage area to be a defective area and measuring the size of the defective area; and
   a defect management section for instructing the writing control section to assign a replacement area of the size that has been determined based on the measured one of the defective area on the optical disc in accordance with an instruction to write the data and then to continue to write the data on the replacement area that has been assigned.

2. The optical disc apparatus of claim 1, wherein a number of tracks are arranged on the optical disc, and wherein if the error has occurred, the defect determining section instructs the optical pickup to access the tracks intermittently, thereby determining an area on which a predicted type of error has occurred to be the defective area.

3. The optical disc apparatus of claim 2, wherein the writing control section detects a servo error by determining how long the signal level of a servo signal, generated based on the light intensity signal, is higher than a predetermined threshold value, and wherein the defect determining section determines an area where the servo error has occurred to be a defective area.

4. The optical disc apparatus of claim 3, wherein the defect determining section instructs the optical pickup to access the tracks at predetermined regular intervals, and determines an area where servo errors have occurred a number of times to be the defective area.

5. The optical disc apparatus of claim 1, wherein the writing control section is able to detect a servo error based on a servo signal that has been generated from the light intensity signal, and wherein if the error is a servo error that has occurred during a seek operation, the defect determining section starts to measure the size of the defective area.

6. The optical disc apparatus of claim 1, wherein if the error is a data write error and if such write errors have occurred a predetermined number of times, the defect determining section starts to measure the size of the defective area.

7. The optical disc apparatus of claim 1, wherein based on the measured size of the defective area and the size of the data, the defect management section assigns a replacement area, of which the size is equal to or smaller than that of the defective area, on the optical disc.

8. The optical disc apparatus of claim 1, wherein the defective area is an area with a bubble that was produced when the optical disc was made.

9. The optical disc apparatus of claim 8, wherein the defective area covers a number of tracks on the optical disc.

10. The optical disc apparatus of claim 1, wherein the defect management section assigns a replacement area, of which the size is the same as the smaller one of the measured size of the defective area and the size of the data yet to be written, on the optical disc.

11. The optical disc apparatus of claim 1, wherein a user data area and a spare area are provided on the optical disc, and wherein if an error has occurred while data is being written on the replacement area, the defect management section instructs the writing control section to find another replacement area within the spare area and to continue to write the data on that another replacement area found.

**Amended claims under Art. 19.1 PCT**

1. (Amended). An optical disc apparatus for detecting an error that has been caused due to the presence of a defective area in a storage area of an optical disc while data is being written on that storage area and continuing to write the data on a replacement area that substitutes for the defective area, the apparatus comprising:

   an optical pickup for irradiating the optical disc with a light beam and generating a light intensity signal based on the light beam that has been reflected from the optical disc;
   a writing control section for controlling writing of data onto the storage area of the optical disc by driving the optical pickup;
   a defect determining section, which retains a condition on a defective area determining process and which determines whether or not the condition has been satisfied if an error has occurred_while the data is being written, wherein on determining that the condition has been satisfied, the determining section determines the storage area where theerror has occurred to be a defective area and measures the size of the defective area but on determining that the condition has not been satisfied, the determining section does not measure the size of the defective area; and
   a defect management section for instructing, inaccordance with an instruction to write the data, the writing control section to assign a replacement area as soon as the error has occurred and then to continue to write the data on the replacement area that has been assigned,
   wherein if the size of the defective area has been measured, the defect management section assigns a replacement area of the size that has been determined by the measured size of the defective area on the optical disc, but unless the size of the defective area has been measured, the defect management section assigns a replacement area of a predetermined size on the optical disc.

2. (Amended). The optical disc apparatus of claim 1, wherein a number of tracks are arranged on the optical disc, and wherein on determining that the condition has been satisfied, the defect determining section instructs the optical pickup to access the tracks intermittently, thereby determining an area on which a predicted type of error has occurred to be the defective area.

3. The optical disc apparatus of claim 2, wherein the writing control section detects a servo error by determining how long the signal level of a servo signal, generated based on the light intensity signal, is higher than a predetermined threshold value, and
   wherein the defect determining section determines an area where the servo error has occurred to be a defective area.

4. The optical disc apparatus of claim 3, wherein the defect determining section instructs the optical pickup to access the tracks at predetermined regular intervals, and determines an area where servo errors have occurred a number of times to be the defective area.

5. (Amended). The optical disc apparatus of claim 1, wherein the writing control section is able to detect a servo error based on a servo signal that has been generated from the light intensity signal, and
   wherein the condition is whether or not the error is a servo error that has occurred during a seek operation, and on determining that the condition has been satisfied, the defect determining section starts to measure the size of the defective area.

6. (Amended). The optical disc apparatus of claim 1, wherein the conditions are whether or not the error is a data write error and whether or not such write errors have occurred a predetermined number of times, and on determining that the conditions have been satisfied, the defect determining section starts to measure the size of the defective area.

17

7. The optical disc apparatus of claim 1, wherein based on the measured size of the defective area and the size of the data, the defect management section assigns a replacement area, of which the size is equal to or smaller than that of the defective area, on the optical disc.

8. The optical disc apparatus of claim 1, wherein the defective area is an area with a bubble that was produced when the optical disc was made.

9. The optical disc apparatus of claim 8, wherein the defective area covers a number of tracks on the optical disc.

10. The optical disc apparatus of claim 1, wherein the defect management section assigns a replacement area, of which the size is the same as the smaller one of the measured size of the defective area and the size of the data yet to be written, on the optical disc.

11. The optical disc apparatus of claim 1, wherein a user data area and a spare area are provided on the optical disc, and wherein if an error has occurred while data is being written on the replacement area, the defect management section instructs the writing control section to find another replacement area within the spare area and to continue to write the data on that another replacement area found.

*FIG.1*

**(a)**

WRITE →

SECTOR  CLUSTER (ECC BLOCK)  BUBBLE AREA

a  DETECT BUBBLE PROVISIONALLY

User Area

b  MEASURE BUBBLE SIZE
c  RELOCATE DATA TO BE WRITTEN AT A TIME

DEFECT REPLACEMENT

Spare Area

d  WRITE ON SPARE AREA

**(b)**

WRITE →

BUBBLE AREA

a  DETECT BUBBLE PROVISIONALLY

User Area

UNRECORDED AREA

b  MEASURE BUBBLE SIZE
c  RELOCATE DATA TO BE WRITTEN AT A TIME

DEFECT REPLACEMENT

Spare Area

d  WRITE ON SPARE AREA

**(c)**

WRITE →

a  DETECT BUBBLE PROVISIONALLY  BUBBLE AREA

User Area

b  MEASURE BUBBLE SIZE

DEFECT REPLACEMENT  c  RELOCATE DATA TO BE WRITTEN AT A TIME

Spare Area

d  WRITE ON SPARE AREA

**(d)**

a  a  BUBBLE AREA

a  a  BUBBLE AREA

User Area

b

c

b

c

Spare Area

d

d

## FIG.2

I/O BUS — 170

104 — CPU

106 — ENCODER/ DECODER

108 — TUNER

— 110
INSTRUCTION PROCESSING SECTION

— 120
WRITING CONTROL SECTION

— 130
READING CONTROL SECTION

— 140
DEFECT MANAGEMENT SECTION

— 150
LARGE-SCALE DEFECT DETERMINING SECTION

DEFECT MANAGEMENT INFORMATION BUFFER — 160a

DATA BUFFER — 160b

LARGE-SCALE DEFECT INFORMATION BUFFER — 160c

LARGE-SCALE DEFECT PROVISIONALLY DETECTED INFORMATION BUFFER — 160d

BD RECORDER 100

OPTICAL DISC DRIVE 102

BUFFERS 160

*FIG.3*

DRIVE SECTION
630

OPTICAL DISC
DRIVE
102

I/O BUS
170

10

203

140

143

202

136

DRIVER

FEPWM

138

DRIVER

TEPWM

204

206

205

207

208

LASER
DRIVER

378

B | A
D | C

412

DSP

358

FE

PUSH-PULL
TE

408

364

368

414

410  416  420

GAIN
SWITCH-
ER

A/D

GAIN
SWITCH-
ER

A/D

372

HPF

373

EQ

374

BINARI-
ZATION

375

ECC
MODULA-
TION/
DEMODU-
LATION

376

BUFFER

377

WRITE
DATA

READ
DATA

344

352

COMPARATOR

PHASE
COM-
PAR-
ATOR

GAIN
SWITCH-
ER

A/D

346

COMPARATOR

354

356

360  366

370

PHASE
DIFFER-
ENCE
TE

OPTICAL PICKUP 610

ODC  620

630

SYSTEM
CONTROLLER

*FIG.4*

```
                        ┌──────────┐
                        │  Start   │
                        └────┬─────┘
                             │
                             ↓              S41
                      ◇─────────────◇        No
                      │ WRITE REQUEST? │─────────→ ( End )
                      ◇─────────────◇
                             │
                            Yes
                             ↓                  S42
            No        ◇─────────────────◇
        ┌───────────│   LARGE-SCALE      │
        │            │  DEFECTIVE AREA?   │
        │            ◇─────────────────◇
        │                    │
        │                   Yes
        │                    ↓
        │         ┌──────────────────────┐  S43
        │         │ GET REPLACEMENT AREA  │
        │         │ AND ADD THE DEFECTIVE │
        │         │    AREA TO LIST       │
        │         └──────────┬───────────┘
        │                    │
        └───────────────────→│
                             ↓
                  ┌──────────────────┐  S44
                  │      WRITE        │
                  └────────┬──────────┘
                           │                  S45
         No          ◇────────────◇
    ←──────────────│   ERRORS?     │
                    ◇────────────◇
                           │
                          Yes
                           ↓
              ┌──────────────────────────┐  S46
              │ DEFECT REPLACEMENT PROCESS│
              └────────────┬─────────────┘
                           │
                           ↓
              ┌──────────────────────────┐  S47
              │ PROVISIONALLY DETECT AND  │
              │ MEASURE THE SIZE OF THE   │
              │ LARGE-SCALE DEFECTIVE AREA│
              └──────────────────────────┘
```

*FIG.5*

```
         ┌─────────────┐
         │    ERROR    │
         │  PROCESSING │
         └──────┬──────┘
                │
  Yes    ╱──────▼──────╲    S50
 ◄───────  SPARE AREA   ╲
         ╲   USED UP?   ╱
          ╲────┬───────╱
               │ No          S51
  Yes    ╱─────▼──────╲
 ◄───────  IS THIS    ╲
         ╲ CLUSTER ALREADY ╱
         ╲ SUBSTITUTED?  ╱
          ╲───┬────────╱
              │ No          S52
         ╱────▼───────────╲                          ┌──────────────────┐
        ╱  IS THIS A SERVO  ╲    Yes                 │    DETECT AND    │  S56
        ╲ ERROR DURING SEEK? ╱ ──────►               │  MEASURE BUBBLE  │
         ╲──────┬───────────╱                        └────────┬─────────┘
                │ No         S53                              │          S57
  No     ╱──────▼──────╲                             ╱────────▼────────╲
 ◄───────  WRITE ERROR? ╲                           ╱     BUBBLE?       ╲  No
         ╲──────┬───────╱                           ╲                   ╱ ───►
                │ Yes         S54                     ╲────────┬───────╱
         ┌──────▼──────────┐                                  │ Yes
         │  ADD WRITE ERROR │                         ┌───────▼────────┐  S58
         │ INFORMATION TO LIST│                        │    MEASURE     │
         └──────┬──────────┘                          │ THE BUBBLE SIZE │
                │                                      └───────┬────────┘
                │                                              │          S59
         ╱──────▼──────────╲    S55                    ┌───────▼────────┐
        ╱   WRITE ERRORS     ╲   Yes                   │  ADD THE BUBBLE │
        ╲ OCCURRED PREDETERMINED╱ ──────►              │  AREA TO LIST  │
        ╲ NUMBER OF TIMES?  ╱                          └────────────────┘
         ╲──────┬──────────╱
                │ No
                │
                ▼
         ┌─────────────┐
         │     End     │
         └─────────────┘
```

*FIG.6*

(a)

*FIG.7*

*FIG.8*

(a)

LARGE-SCALE DEFECTIVE AREA (BUBBLE AREA)

Wt1 : EXECUTION TIME ELAPSED WHEN WRITE ERROR OCCURRED
Wt2 : TIME FOR GETTING WRITE OPERATION EXECUTED
St : SEEK TIME
C : NUMBER OF CLUSTERS TO PROCESS

EXECUTION TIME $Ta = (Wt1 + St + Wt2 + St) * C$

(b)

LARGE-SCALE DEFECTIVE AREA (BUBBLE AREA)

Wt1 : EXECUTION TIME ELAPSED WHEN WRITE ERROR OCCURRED
Wt2 : TIME FOR GETTING WRITE OPERATION EXECUTED
St : SEEK TIME
C : NUMBER OF CLUSTERS TO PROCESS
Bt : TIME IT TAKES TO MEASURE THE SIZE OF THE LARGE-SCALE DEFECTIVE AREA

EXECUTION TIME $Tb = (Wt1 + Bt + St) + (Wt2 * C)$

*FIG.9*

*FIG.10*

FIG.11

EP 2 073 208 A1

## FIG.12

STORAGE
LAYER 31

32 — R—Info

33 — LEAD-IN AREA

34 — USER DATA AREA

35 — LEAD-OUT AREA

RECORD
MANAGEMENT
AREA

DISC
INFORMA-
TION AREA

36

37

RMD
#1 | RMD
#2 | ... | RMD
#M

38 | 38 | | 38

## FIG.13

EP 2 073 208 A1

| | 42 | 43-1 | 44 | 43-2 | 45 |
|---|---|---|---|---|---|
| STORAGE LAYER 41 | LEAD-IN AREA | SPARE AREA | USER DATA AREA | SPARE AREA | LEAD-OUT AREA |

| DISC INFORMA-TION AREA | DEFECT MANAGEMENT AREA | 47-1 | GROUP OF DEFECT MANAGEMENT WORK AREAS | 48 | DEFECT MANAGEMENT AREA | 47-2 |

46

| DDS | DL |
|---|---|

49      50

| DEFECT MANAGEMENT WORK AREA #1 | DEFECT MANAGEMENT WORK AREA #2 | ... | DEFECT MANAGEMENT WORK AREA #N |
|---|---|---|---|

51

| TDL | TDDS |
|---|---|

52      53

# FIG.14

(a)

(b)

*FIG.15*

(a)

(b)

## FIG.16

## FIG.17

## FIG.18

## FIG.19

RELOCATE DEFECTIVE
AREA ON LIST AT A TIME
(WITH FIXED LENGTH)

## FIG.20

(a)

BUBBLE

PSEUDO OFF-TRACK COMPONENT

TE SIGNAL

(b)

DRIVE SIGNAL

*FIG.21*

# EP 2 073 208 A1

| INTERNATIONAL SEARCH REPORT | International application No. |
|---|---|
| | PCT/JP2007/069283 |

**A. CLASSIFICATION OF SUBJECT MATTER**
*G11B20/12*(2006.01)i, *G11B7/004*(2006.01)i, *G11B7/0045*(2006.01)i, *G11B20/10*(2006.01)i, *G11B20/18*(2006.01)i

According to International Patent Classification (IPC) or to both national classification and IPC

**B. FIELDS SEARCHED**

Minimum documentation searched (classification system followed by classification symbols)
G11B20/12, G11B7/004, G11B7/0045, G11B20/10, G11B20/18

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-176204 A  (Ricoh Co., Ltd.),<br>29 June, 2001 (29.06.01),<br>Claim 1; Par. No. [0052]; Fig. 5<br>(Family: none) | 1,3,5-11<br>2,4 |
| Y | JP 11-167751 A  (Hitachi, Ltd.),<br>22 June, 1999 (22.06.99),<br>Fig. 5<br>(Family: none) | 2,4 |
| P,A | JP 2007-35153 A  (Ricoh Co., Ltd.),<br>08 February, 2007 (08.02.07),<br>Full text; all drawings<br>(Family: none) | 1-11 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 December, 2007 (07.12.07) | 18 December, 2007 (18.12.07) |

| Name and mailing address of the ISA/<br>Japanese Patent Office | Authorized officer |
|---|---|
| Facsimile No. | Telephone No. |

Form PCT/ISA/210 (second sheet) (April 2007)

**REFERENCES CITED IN THE DESCRIPTION**

**Patent documents cited in the description**

- JP 2002184116 A